# EUROPEAN PATENT SPECIFICATION

(11) **EP 3 224 008 B1**
(45) Date of publication and mention of the grant of the patent: **29.06.2022**
(21) Application number: 15802093.3
(22) Date of filing: 30.11.2015
(51) Int. Cl.: B26D 7/06, B65G 15/08, B65G 15/22, A22C 17/00, B26D 1/16, B26D 1/30, B26D 1/36, B26D 5/00, B26D 7/26

(54) **A CONVEYOR SYSTEM WITH A KNIFE FOR CUTTING FOOD ITEMS INTO SMALLER FOOD ITEMS**
FÖRDERANLAGE MIT EINEM MESSER ZUM SCHNEIDEN VON LEBENSMITTELN IN KLEINERE LEBENSMITTELTEILE
SYSTÈME DE TRANSPORTEUR AVEC UN COUTEAU SERVANT À COUPER DES PRODUITS ALIMENTAIRES EN PLUS PETITS ARTICLES ALIMENTAIRES

(30) Priority: 28.11.2014 EP 14195494
(43) Date of publication of application: 04.10.2017
(73) Proprietor: Marel A/S, 8200 Aarhus N (DK)
(72) Inventor: SØRENSEN, Gorm, 3720 Aakirkeby (DK); MIKKELSEN, Peter, 3740 Svaneke (DK)
(74) Representative: Inspicos P/S
(86) International application number: PCT/EP2015/078099
(87) International publication number: WO 2016/083622

(56) References cited:
- EP-A1- 1 555 882
- EP-B1- 1 555 882
- DE-A1-102007 063 112
- DK-U3- 9 600 164
- GB-A- 2 378 378
- GB-A- 2 378 378
- US-A1- 2010 275 790
- US-A1- 2010 275 790
- US-B1- 6 360 878
- US-B1- 6 360 878

## Description

### FIELD OF THE INVENTION

The present invention relates to a conveyor system with a knife adapted to cut food items into smaller food items. The present invention further relates to a method of cutting food items into smaller food items using such a conveyor and a knife system

### BACKGROUND OF THE INVENTION

Within the foodstuffs industry, demands are made from time to time concerning special cuts of meat, an example of these being special portion cuts of poultry. The starting point for the meat cuts is flat foodstuff e. g. de-boned leg-meat, where the remaining meat and skin are made "smooth" in one piece.

The Danish Utility Model DK 96 00164 U3 describes an apparatus for portion cutting where a food product is transported on the conveyor system consisting of two conveyors installed end to end with a cutting gap there between. A scanning system is provided over the first conveyor system and a rotating sword like knife is arranged such that it by turning passes through the gap and cuts the food product into smaller food products when it passes the gap. The cutting is controlled by a controller in accordance with setup parameters and the found shape of the product during the scanning phase.

With such an apparatus a food product is typically cut into small food products of an extension of more than 10 mm in the conveying direction, and they will typically be of different extension.

The width of the conveyor system in such an apparatus is typically in the range 200 to 300 mm. The turning point of the sword like knife is typically arranged 150 to 200 mm from the side of the conveyor next to the gap and in more or less the same height. Hence the knife will typically have a length of 350 to 500 mm.

To fulfill the requirement of varying extension in the conveying direction, the knife is typically turned one revolution and stopped in a position opposite the conveyor system after each cut. To make e.g. 7 cuts per second the acceleration from 0° to 180° must happen in 71 ms and the deceleration from 180° to 360° also in 71 ms; this makes a max periphery speed of 44.0 m/s for a knife of 500 mm length.

The force the knife is exposed to under such conditions will easily get it to flex and bend during the acceleration, such that it will not hit the food product exactly where it is planned. To compensate for that, very often, a guide system is provided to steer the far end of the knife.

This known apparatus, and other known apparatuses of the same type typically comprise a knife blade arranged at the side of the apparatus and where the length of the cutting blade must typically exceed the width of the conveyors transporting the food items. This makes the cutting knife blade relative heavy which obviously may affect the speed of the cutting. Also, the fact that the cutting knife blade is arranged at the side makes the cutting apparatus spacious.

GB 2 378 378 describes a rotary cutter according to the preamble of claim , with a protruding blade, having serrated and smooth sections.

### SUMMARY OF THE INVENTION

On the above background it is an object of embodiments of the present invention to provide an improved conveyor system with a knife for cutting food items that requires less space and has higher throughput.

In general, the invention preferably seeks to mitigate, alleviate or eliminate one or more of the above mentioned disadvantages of the prior art singly or in any combination. In particular, it may be seen as an object of embodiments of the present invention to provide a conveyor system with a knife that solves the above mentioned problems, or other problems.

To better address one or more of these concerns, in a first aspect of the invention a conveyor system according to claim 1 is provided.

This conveyor and knife system is mainly to be used for flat food items, such as fish fillets and chicken leg meat.

Since the conveyor is concave and the knife device is positioned above the conveyor it is possible to reduce the size and the inertia of the knife device such that the cutting speed may be increased and therefore the throughput of the conveyor system with a knife.

The term concave may be understood as any shape, which does not necessarily have to be smoothly shaped, having a center part that is positioned at a lower position than the side parts, e.g. have U-shape, V-shape, arc-shape, and the like.

In one embodiment, the carrying surface comprises two or more side by side arranged endless belts or cords. The cords may have any type of cross-sectional profile, such as a round profile or V-shaped profile.

In one embodiment the conveyor system comprises one conveyor where the gap is defined by looping the belts or cords around a roller below the carrying surface of the conveyor.

In one embodiment, the conveyor system comprises a first and a second conveyor means, where a second end of the first conveyor is positioned adjacent to a first end of the second conveyor means and where the gap is defined by a distance between the second and the first ends. In any case the gap may extend accross the conveyor system perpedicular to the conveying direction, or it may form an angle to an axis perpendicular to the conveying direction. This angle may as an example be, but is not limited to, between 30 and 60°, such as around 45°, depending among other things on the cutting criteria which may be based on an order from a customer.

In one embodiment, the cross-sectional shape of the carrying surface extending accross the conveyor system perpendicular to the conveying direction, is an arc having a center of a circle substantially at the rotational axis of the rotatable knife device. Accordingly, the first gap will also form an arc having a center of a circle substantially at the rotational axis of the rotatable knife device.

However, in case the first gap forms an angle to the axis perpendicular to the conveying direction, the cross section of the gap will be elleptical. In this case the center of the rotational axis of the rotatable knife device and the length of the knife device, will be determined, such that the knife blade follows the profile of the first gap at least with approximation.

In a further embodiment, the cross-sectional shape of the carrying surface extending accross the conveyor system seen in the direction of the conveyor forms a vertically oriented elliptical section shape such that the shape of the first gap when the first gap forms an angle to the axis perpendicular to the conveying direction can be an arc having a center of a circle being substantially at the rotational axis of the rotatable knife device. It is thus ensured, in case the first gap forms such an angle that the path of the knife device can follow the shape of the first gap.

In one embodiment, the conveyor and knife system further comprises a cutting plane adjustment mechanism adapted to tilt the angle of the knife plane compared to vertical by means of adjusting the angular position of the knife device(s). It is thus possible to increase the variety of the cuts. It may as an example be preferred to cut the food items in such a way that they have more natural shape, instead of making only vertical cuts as an example. To accomodate this, the knife arrangement with the knife device can be tilted such that the center of the rotational axis is not directly vertically above the gap in the carrying surface of the conveyor.

In one embodiment, the conveyor system with a knife further comprises a second gap positioned downstream in relation to the first gap, wherein the second gap forms an angle in relation to the first gap, and where the conveyor system with a knife further comprises a second rotatable knife device having a knife plane extending through the second gap. In an embodiment, the angle of the second gap is shifted, in relation to the angle of the first gap, between 70° and 110°, preferably around 90°.

Accordingly, it is possible to fully automatically cut food items such as boneless chicken leg into smaller food items that fulfil pre-defined criteria such as weight criteria and/or size criteria. As an example, a rectangular/square shaped smaller food items might be requested by a customer. The first knife device would accordingly cut the food items into plurality of strips whereas the second knife device cut the strips into further smaller pieces, e.g. substantially rectangular/square pieces.

In one embodiment, a spacer may be provided for creating a space between adjacent strips after undergoing the cutting process by first knife device, e.g. by stopping the first conveyor after each cut for e.g. a second or a fraction of second while the second conveyor is continously running.

An additional spacer or spacer system, which may e.g. comprise one or more additional conveyor, may be provided between the first and the second conveyors for increasing the space even further before the strips are cut into smaller food items, e.g. the substantially rectangular pieces. This may be done by increasing the speed of the conveyors positioned in downstream direction.

In one embodiment, the conveyor system with a knife further comprises a first imaging system positioned upstream in relation to the first gap adapted to obtain first image data of incoming food items, and a processor adapted to receive the first image data to create control parameter for controlling the first rotatable knife device. It is thus possible to operate the first knive device accurately based on the image data so the cutting may fulfill pre-defined target for the smaller food items.

In one embodiment, the conveyor system with a knife further comprises a second imaging system positioned between the first and the second gap adapted to obtain second image data of cut food items, and a processor adapted to receive the second image data to create control parameter for controlling the second rotatable knife device. Similarly as discussed previously it is possible to detect the position and/or the shape of the cut food items from the first knife device so as to operate the second knife device so that the smaller end food items fulfil pre-defined target.

More importantly, the conveyor system with a knife is very compact and is capable of fully automatically cut food items accurately into smaller food items, where the food product and/or the smaller food products may undergo two or more cutting steps or reach the final target.

In one embodiment, the knife device comprises:
- an arm, where the knife blade is mounted to one end of the arm, the opposite end of the arm being adapted to be mounted to a driving unit for supplying rotational movement of the arm and thus the knife blade,
wherein the knife blade is mounted to the arm such that, while cutting a food item into smaller food items, a cutting edge side of the knife blade engages with the food item under an angle such that the knife blade exerts with a downwardly facing force onto the food item and towards the carrying surface of the conveyor system during the cutting.

Accordingly, a knife device is provided that is significantly lighter and smaller than prior art knife devices and that is suitable to be placed above the carrying surface, which may as already mentioned be a conveyor belt of a coveyor apparatus.

In one embodiment, the cutting edge side and the carrying surface or a tangent at the point of contact of the carrying surface around the gap form an acute angle during the cutting. It is thus ensured that a downwardly pointing force is created which prevents the food items to slide or move during the cutting. In an embodiment, the acute angle is between 10° and 60°, preferably between 20° and 30°, most preferably around 25°.

In one embodiment, the angle is adapted to the type and/or the characteristics of the food item and/or the coefficient of friction of the carrying surface such that during cutting, the horizontal force exerted (Fₕₒᵣᵢ) by the knife device onto the food item does not exceed the frictional force between the food item and the carrying surface. It is thus ensured that during the cutting the friction force pointing in the opposite direction to the horizontal force (Fₕₒᵣᵢ) is sufficient to prevent side-wise displacement during the cutting.

The friction between the carrying surface and the food item may be increased by for example providing negative pressure from underneath the conveyor in the cutting zone or by using a weight loaded belt on top of the food item.

In one embodiment, the cutting edge side comprises a smooth cutting edge. In an embodiment, the smooth cutting edge is a substantially straight cutting edge or a curved line.

In one embodiment, the arm is made of a material selected from:
- carbon fibers,
- ceramic material,
- plastic material, or
- metal or metal alloy.

In one embodiment, the length of the arm is adapted to the maximum thickness of the food items, such that when the arm is mounted to the driving unit, the length of the arm is shorter than the distance from the pivot to the food items with a clearance distance between the end of the arm and the top of the food items. The clearance distance may in one embodiment be in the range of 1 to 9 mm, preferably in the range of 3 to 7 mm, most preferably around 5 mm.

Since the height of the product is limited to the distance from the arm to the carrying surface it may be advantageous to use a so called flattener before the cutting system, alternatively a sensor system may be used to abort cutting if the height of the products exceeds this limit.

In one embodiment, the rotatable knife device is positioned above the carrying surface of the conveying system by having a rotational axis of the rotatable knife device arranged above the carrying surface.

In one embodiment, the rotatable knife device is positioned above the carrying surface of the conveying system by having a rotational axis of the rotatable knife device arranged above the carrying surface at a selected position within the width of the conveying system, e.g. the width of the carrying surface.

In one embodiment, the shape of the concave carrying surface around the first and/or the second gap essentially follows the knife path of the rotatable knife blade in that the concave carrying surface around and along the respective gap is outside a first arc A1 having a radius r1 with the rotational axis of the rotatable knife device as center and inside a second arc A2 having a radius r2 with the rotational axis of the rotatable knife device as center.

In one embodiment, the radius r2 of the second arc A2 is less than the distance from the rotational axis of the rotatable knife blade to a distal end of the knife blade.

The difference between the radius r2 of the second arc A2 and the distance from the rotational axis of the rotatable knife blade to the distal end of the knife blade may in one embodiment be in the range of 1 to 9 mm, preferably in the range of 3 to 7 mm, most preferably around 5 mm.

In one embodiment, the radius r1 of the first arc A1 is more than 80% of the radius r2 of the second arc A2. In a further embodiment, the radius r1 of the first arc A1 may be more than 90% of the radius r2 of the second arc A2 and in a more preferred embodiment the radius r1 of the first arc A1 may be more than 94% of the radius r2 of the second arc A2.

According to a second aspect, the present invention relates to a method according to claim 13.

### BRIEF DESCRIPTION OF THE DRAWINGS

Embodiments of the invention will be described, by way of example only, with reference to the drawings, in which
figure 1 shows a conveyor system with a knife according to the present invention adapted to cut food items into smaller food items,
figure 2 depicts graphically an embodiment where a carrying surfaces for carrying food items to be cut comprises a plurality of side by side arranged endless cord belts,
figure 3 shows an embodiment where concave shape of the carrying surface around the first gap is an arc,
figure 4a,b,c depicts graphically the movement of the knife device shown in figure 1,
figure 5a,b,c depicts one embodiment of a conveyor system with a knife according to the present invention,
figure 6a,b,c depicts the conveyor system with a knife shown in figure 5, but where the system shown here further comprises a spacer or spacer system for separating the smaller food items after the first cutting process from each other, and
figures 7, 8 and 9 show various forms of a concave carrying surface around the first and/or the second gap to illustrate that the surface essentially follows the knife path of the rotatable knife blade.

### DESCRIPTION OF EMBODIMENTS

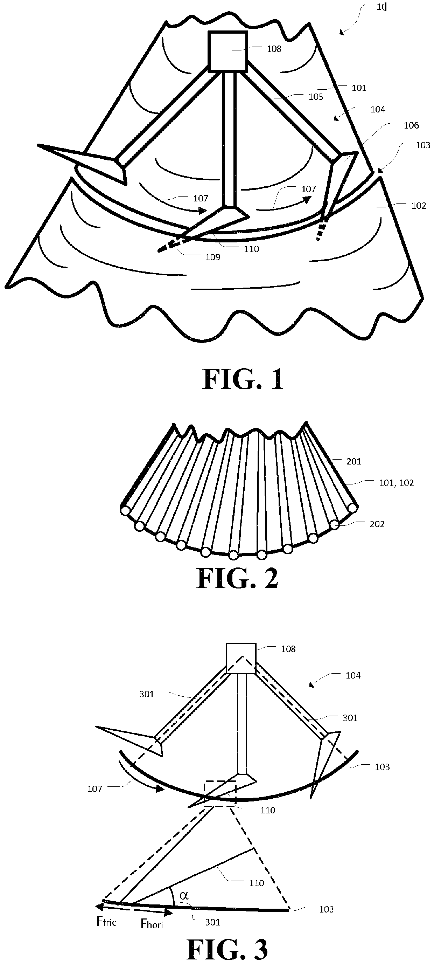

Figure 1 shows a conveyor system with a knife 100 according to the present invention adapted to cut food items into smaller food items. The conveyor system with a knife comprises a first rotatable knife device 104 driven by a driving unit 108, where the knife device comprises a knife blade 106. The conveyor system with a knife further comprises a conveying system for conveying food items to be cut. The conveyor system in this embodiment comprises a first 101 and a second 102 conveyors, where a second end of the first conveyor is positioned adjacent to a first end of the second conveyor and where a first gap 103 is defined by a distance between the second and the first ends.

As shown, the rotatable knife device 104 is positioned above the first gap 103 extending accross the conveyor system with a knife plane of the rotatable knife device extending through the first gap 103. As will be discussed in more details later, the rotatable knife device is adapted for cutting a food item into smaller food items while the food item passes the first gap, wherein the shape of the carrying surface 101, 102 around the first gap is concave and essentially follows the knife path 107 of the rotatable knife blade 106. As shown here, the knife device 104 is positioned such that a distal end 109 of the knife blade extends through the carrying surface, e.g. some millimeters below the carrying surface.

The carrying surface may comprise a support surface and two or more side by side arranged endless belts or cords (not shown here) that extend longitudinally along the carrying surface.

The knife device 104 comprises an arm 105 and a knife blade 106. The arm is preferably made of light weight material such as, but not limited to, carbon fibers and the like.

The knife blade 106 is mounted to one end of the arm, where the opposite end of the arm is mounted to the driving unit 108 that supplies the rotational movement 107 of the arm and thus the knife blade. As will be discussed in more details later the knife blade 106 is mounted to the arm such that, while cutting a food item into smaller food items, a cutting edge side 110 of the knife blade engages with the food item under an angle such that the knife blade exerts with a downwardly facing force onto the food item and towards the carrying surface of the conveyor system during the cutting.

Figure 2 depicts graphically an embodiment where the carrying surfaces 101, 102 comprises a plurality of side by side arranged endless cord belts 201 where as shown here the cord may have a circular cross sectional shapes 202. It is thus easy to arrange the cord belts such that they follow the shape of the support surface.

Figure 3 shows an embodiment where the concave shape of the carrying surface around the first gap is an arc 301 having a center of a circle being substantially at the rotational axis of the rotatable knife device 104.

Shown is also a zoomed up view of the knife device 104, where the angle 301 between a cutting edge side 110 and a tangent to the carrying surface 103 (or at the point of contact of the carrying surface around the gap) is an acute angle during the cutting. In one embodiment, the acute angle is between 10° and 60°, preferably between 20° and 30°, most preferably around 25°.

The angle 301 is adapted to the type and/or the characteristics of the food item and/or the coefficient of friction of the carrying surface such that during cutting, the horizontal force Fₕₒᵣᵢ exerted by the knife device onto the food item does not exceed the frictional force F_{fric} between the food item and the carrying surface.

As an example, in case the food item is boneless chickenleg experiments have shown that a preferred angle is around 25°. Assuming that the maximum thickness h of the boneless chickenlegs is as an example 15 mm the length *X* of the cutting edge side 103 must at least be: *X*=(*hₘₐₓ*)/sin25°=15 mm/sin25°=35,5 mm.

Accordingly, a very short knife blade is needed to perform the cutting of such boneless chickenlegs, where the primary part of the knife device is the arm, which as already addressed can be made of any type of light weight material.

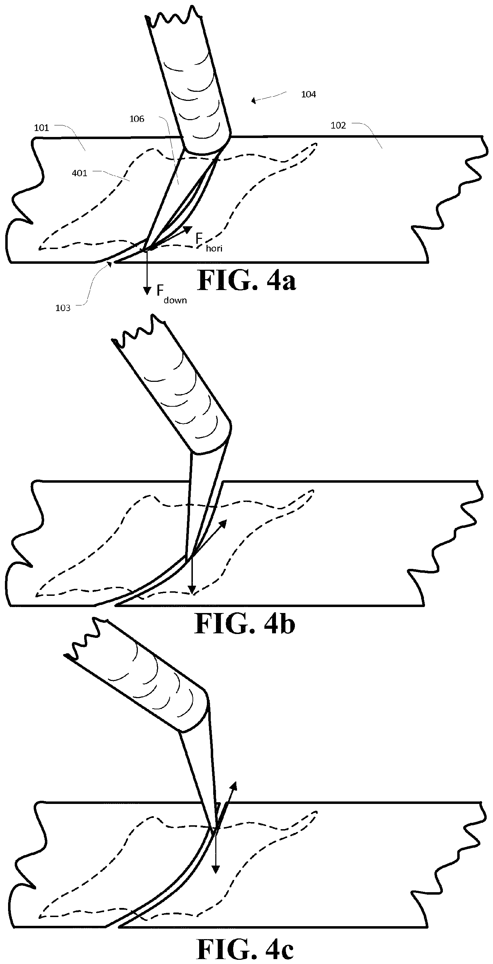

Figure 4a,b,c depicts graphically the movement of the cutting device 100 shown in figure 1 where the carrying surface may be a surface of a single conveyor where the gap 103 may be created via e.g. a bypass loop, or via the two conveyors 101, 102 discussed previously in relation to figure 1.

As shown here, the knife blade 106 exerts with a downwardly pointing force F_{down} and a horizontal force Fₕₒᵣᵢ as discussed previously in relation to figure 3 onto the food product, where the angle between the knife blade and the carrying surface discussed previously is such that the friction force pointing opposite to the horizontal force Fₕₒᵣᵢ is equal so as to prevent side-wise sliding of the food item 401.

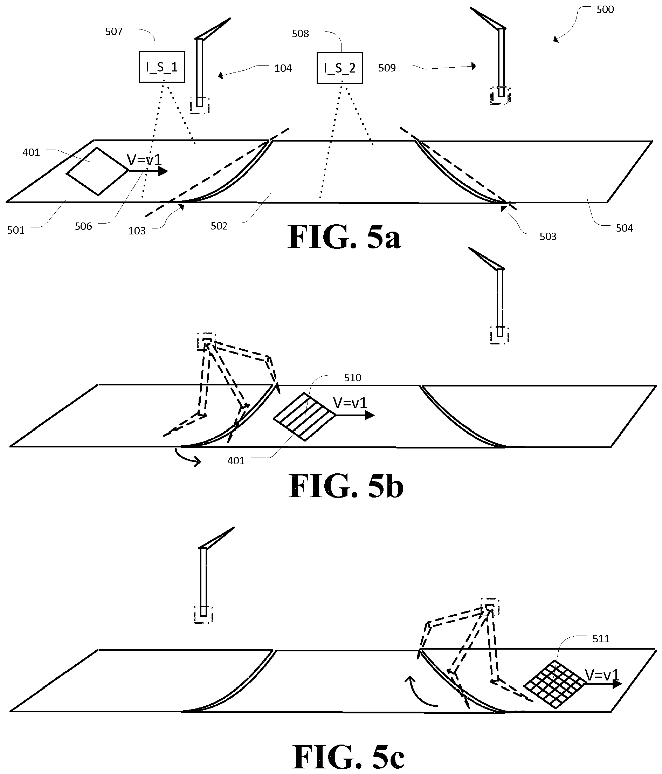

Figure 5a,b,c shows one embodiment of the conveyor system with a knife according to the present invention where the conveyor system with a knife further comprises a second gap 503 positioned downstream in relation to the first gap or the moving direction of the conveyor system as indicated by arrow 506. The second gap 503 may be defined by means of placing a second end of a second conveyor 502 adjacent to a first end of a third conveyor 504.

As shown here the second gap forms an angle in relation to the first gap, and where the conveyor system with a knife further comprises a second rotatable knife device 509 arranged above the second gap having a knife plane extending through the second gap 503. The angle of the second gap is shifted, in relation to the angle of the first gap, between 70° and 110°, preferably around 90°.

In operation, the food item 401 which may e.g. be a boneless chicken leg is conveyed in a conveying direction 506 at a conveying speed v1. A first imaging system 507 is positioned upstream in relation to the first gap 103 and is adapted to obtain first image data of the food item 401. A processor receives and processes the first image data to create control parameter for controlling the first rotatable knife device 104, where the controlling may include when to initiate the cutting and when to stop the cutting, preferably so as to divide the food item 401 into smaller food items.

Figure 5b shows where the food item 401 has been cut into a plurality of smaller food items, in this case a plurality of strips 510 preferably of equal size, by the first knife device 104. The second conveyor 502 in this embodiment moves with the same speed as the first conveyor, i.e. V=v1.

Between the first gap 103 and the second gap is a second imaging system 508 for obtaining second image data of the cut food item where the processor processes the second image data for creating control commands for the second knife device 509.

Figure 5c shows where the strips 510 have undergone a second cutting process by the second knife device 509. If the arrangement of the second gap 503 is 90° compared to the first gap 103 the food item is cut into substantially rectangular pieces 511 of equal size.

The final food product shown here is accordingly a plurality of substantially rectangular pieces that are placed together as a kind of a single piece.

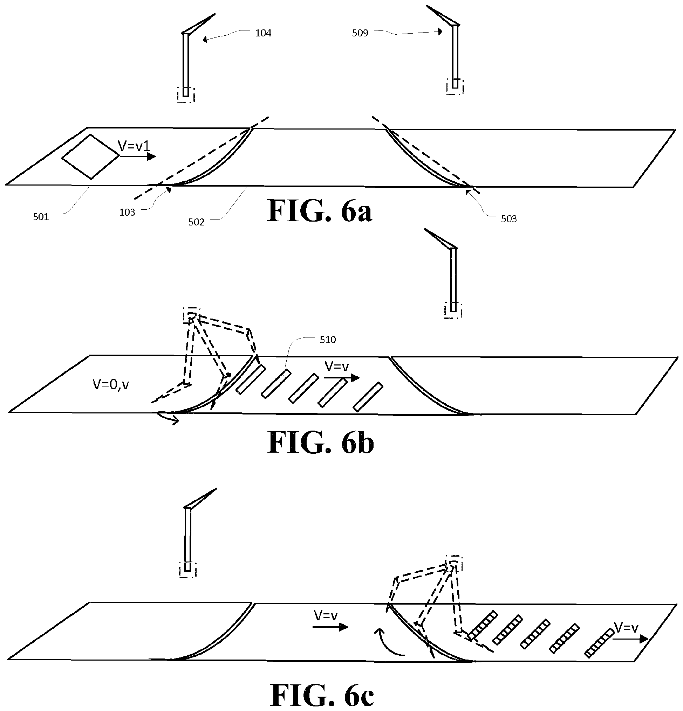

Figure 6a,b,c depicts the conveyor system with a knife shown in figure 5, but where the system shown here further comprises a spacer or spacer system for separating the smaller food items after the first cutting process from each other. In this example, the spacer may comprise a speed control unit the controls separately the speed of the first conveyor 501 and the second conveyor 502 such that a space is created between the strips 510 as shown in figure 6b.

As an example, this may be achieved by via stopping and starting the first conveyor during the operation, e.g. after cutting each item, the first conveyor is stopped temporarily, e.g. for a fraction of a second, while the second conveyor 502 is running.

An additional spacer may also be provided between the first gap 103 and the second gap 503 for further increasing the distance between the strips before undergoing the second cutting process by the second knife device 509. An additional conveyor unit (not shown) may as an example be provided that is placed downstream in relation to the previous conveyor unit (e.g. the second conveyor) that runs at higher speed such that the space between the strips is further increased.

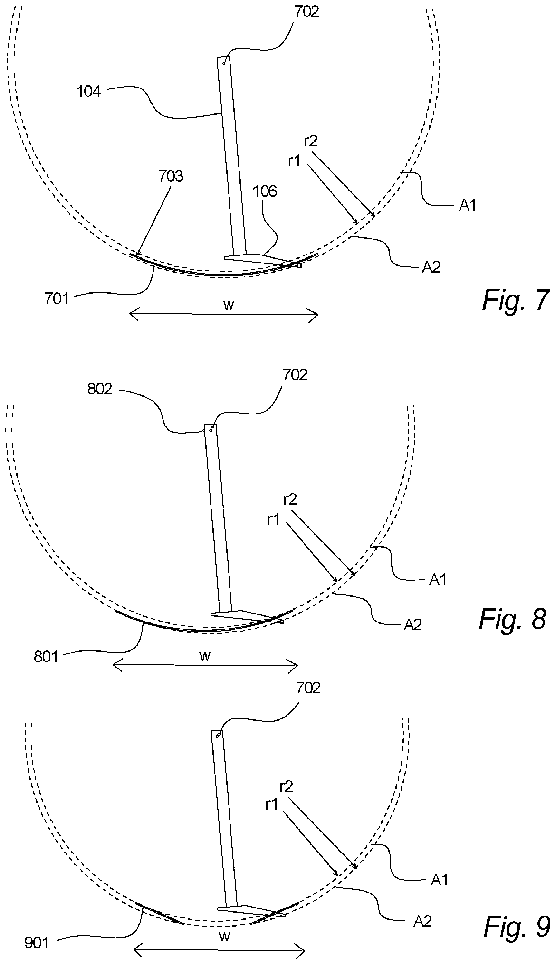

Figures 7, 8 and 9 show various forms of a concave carrying surface 701, 801, 901 around the first and/or the second gap to illustrate that the surface essentially follows the knife path of the rotatable knife blade 106.

Figure 7 shows a concave carrying surface 701 with the width w, which concave carrying surface 701 is an arc having the rotational axis 702 of the rotatable knife device 104 as center. As shown, the radius 703 of this arc-shaped concave carrying surface 701 is such that the distal end of the knife blade 106 extends through the arc-shaped carrying surface 701, e.g. some millimeters below the carrying surface. As it will be explained in the following, tolerances for the concave carrying surface can be defined by a first arc A1 having a radius r1 with the rotational axis 702 of the rotatable knife device as center and a second arc A2 having a radius r2 with the rotational axis 702 of the rotatable knife device as center. When a concave carrying surface, e.g. the upper surface of a conveyor belt or the like, is within these arcs, the concave carrying surface will essentially follow the knife path of the rotatable knife blade.

The radius r2 of the second arc A2 is less than the distance from the rotational axis 702 of the rotatable knife blade 104 to a distal end of the knife blade 106.

The difference between the radius r2 of the second arc A2 and the distance from the rotational axis of the rotatable knife blade to the distal end of the knife blade may in one embodiment be in the range of 1 to 9 mm, preferably in the range of 3 to 7 mm, most preferably around 5 mm.

The radius r1 of the first arc A1 may be more than 80% of the radius r2 of the second arc A2. In a further embodiment, the radius r1 of the first arc A1 may be more than 90% of the radius r2 of the second arc A2 and in a more preferred embodiment the radius r1 of the first arc A1 may be more than 94% of the radius r2 of the second arc A2.

Figure 8 shows an example where the concave carrying surface 801, which is arc-shaped, but where the center 802 of the arc is moved sidewards. As shown, the concave carrying surface 801 is inside the limits defined by the first A1 and second arc A2.

Figure 9 shows a further example where the concave carrying surface 901 is irregularly shaped, e.g. made out of linear parts or the like to form the concave shape. As shown, the concave carrying surface 901 is inside the limits defined by the first A1 and second arc A2.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A conveyor system with a knife (100, 500) adapted to cut food items (401) into smaller food items (510, 511), comprising:
• a first rotatable knife device (104) comprising a knife blade (106),
• a conveying system (101, 102) for conveying food items to be cut,
wherein the rotatable knife device is positioned above a carrying surface of the conveying system with the knife plane of the rotatable knife device extending through a first gap, the rotatable knife device being adapted for cutting a food item into smaller food items while the food item passes the first gap,
wherein the conveyor system comprises a first and a second conveyor means (101, 102), where a second end of the first conveyor is positioned adjacent to a first end of the second conveyor means and where the gap is defined by a distance between the second and the first ends, and
**characterised in that** the shape of the carrying surface around the first gap is concave and essentially follows the knife path of the rotatable knife blade, and
• the cross-sectional shape of the carrying surface extending across the conveyor system and perpendicular to the conveying direction is an arc having a center of a circle substantially at the rotational axis of the rotatable knife device, or
• the cross-sectional shape of the carrying surface extending across the conveyor system and seen in the direction of the conveyor forms a vertically oriented elliptical section shape such that the shape of the first gap when the first gap forms an angle to the axis perpendicular to the conveying direction can be an arc having a center of a circle substantially at the rotational axis of the rotatable knife device.

2. The conveyor system with a knife according to claim 1, wherein the carrying surface comprises two or more side by side arranged endless belts or cords (201).

3. The conveyor system with a knife according to any of the preceding claims, wherein the first gap forms an angle to an axis perpendicular to the conveying direction.

4. The conveyor system with a knife according to any of the preceding claims, further comprising a second gap (503) positioned downstream in relation to the first gap (103), wherein the second gap forms an angle in relation to the first gap, and where the conveyor system with a knife further comprises a second rotatable knife device (509) having a knife plane extending through the second gap.

5. The conveyor system with a knife according to claim 4, wherein the angle of the second gap is shifted, in relation to the angle of the first gap, between 70° and 110°, preferably around 90°.

6. The conveyor system with a knife according to any of the claims 1 or 2, wherein the first gap is perpendicular to the conveying direction.

7. The conveyor system with a knife according to any of the preceding claims, further comprising a first imaging system (507) positioned upstream in relation to the first gap (103) adapted to obtain first image data of incoming food items, and a processor adapted to receive the first image data to create control parameter for controlling the first rotatable knife device.

8. The conveyor system with a knife according to claims 4 to 7, further comprising a second imaging system (508) positioned between the first and the second gap adapted to obtain second image data of cut food items, and a processor adapted to receive the second image data to create control parameter for controlling the second rotatable knife device (509).

9. The conveyor system with a knife according to any of the preceding claims, wherein the knife device comprising:
• an arm (105), where the knife blade (106) is mounted to one end of the arm, the opposite end of the arm being adapted to be mounted to a driving unit (108) for supplying rotational movement of the arm and thus the knife blade,
wherein the knife blade is mounted to the arm such that, while cutting a food item into smaller food items, a cutting edge side (110) of the knife blade engages with the food item under an angle (301) such that the knife blade exerts with a downwardly facing force onto the food item (401) and towards the carrying surface of the conveyor system during the cutting.

10. The conveyor system with a knife according to claim 9, wherein the cutting edge side (110) and the carrying surface or a tangent at the point of contact of the carrying surface (101, 102) around the gap form an acute angle during the cutting.

11. The conveyor system with a knife according to claim 10, wherein the acute angle (201) is adapted to the type and/or the characteristics of the food item and/or the coefficient of friction of the carrying surface such that during cutting, the horizontal force exerted (Fₕₒᵣᵢ) by the knife device onto the food item does not exceed the frictional force between the food item and the carrying surface.

12. The conveyor system with a knife according to any of the preceding claims, further comprising a cutting plane adjustment mechanism adapted to tilt the angle of the knife plane compared to vertical by means of adjusting the angular position of the knife device(s).

13. A method of cutting food items into smaller food item using a conveyor system with a knife which comprises:
• a first rotatable knife device comprising a knife blade,
• a conveying system for conveying food items to be cut,
wherein the rotatable knife device is positioned above a carrying surface of the conveying system with the knife plane of the rotatable knife device extending through a first gap, the rotatable knife device being adapted for cutting a food item into smaller food items while the food item passes the first gap,
wherein the conveyor system comprises a first and a second conveyor means (101, 102), where a second end of the first conveyor is positioned adjacent to a first end of the second conveyor means and where the gap is defined by a distance between the second and the first ends, and
**characterised in that** the shape of the carrying surface around the first gap is concave and essentially follows the knife path of the rotatable knife blade, and
• the cross-sectional shape of the carrying surface extending across the conveyor system and perpendicular to the conveying direction is an arc having a center of a circle substantially at the rotational axis of the rotatable knife device, or
• the cross-sectional shape of the carrying surface extending across the conveyor system and seen in the direction of the conveyor forms a vertically oriented elliptical section shape such that the shape of the first gap when the first gap forms an angle to the axis perpendicular to the conveying direction can be an arc having a center of a circle substantially at the rotational axis of the rotatable knife device.

14. The method according to claim 13, wherein the method is for flat food items.

15. The method according to claim 14, wherein the method is for fish fillets or chicken leg meat, such as de-boned leg meat.

16. The method according to any of claims 13-15, wherein the conveyor system is further comprising a second gap (503) positioned downstream in relation to the first gap (103),
wherein the second gap forms an angle in relation to the first gap, and where the conveyor system with a knife further comprises a second rotatable knife device (509) having a knife plane extending through the second gap,
wherein the angle of the second gap is shifted, in relation to the angle of the first gap, between 70° and 110°, preferably around 90°, and
wherein the first knife device cuts the food items into a plurality of strips and the second knife device cut the strips into further smaller pieces being substantially rectangular, such as square, pieces.

## Patentansprüche

1. Fördereranlage mit einem Messer (100, 500), das dazu ausgebildet ist, Lebensmittelstücke (401) in kleinere Lebensmittelstücke (510, 511) zu zerschneiden, aufweisend:
• eine erste drehbare Messervorrichtung (104), die eine Messerklinge (106) aufweist,
• ein Fördersystem (101, 102) zum Fördern von zu zerschneidenden Lebensmittelstücken,
wobei die drehbare Messervorrichtung oberhalb einer Tragoberfläche des Fördersystems angeordnet ist, wobei sich die Messerebene der drehbaren Messervorrichtung durch einen ersten Zwischenraum erstreckt, wobei die drehbare Messervorrichtung zum Zerschneiden eines Lebensmittelstücks in kleinere Lebensmittelstücke, während sich das Lebensmittelstück an dem ersten Zwischenraum vorbeibewegt, ausgebildet ist,
wobei die Fördereranlage ein erstes und ein zweites Förderermittel (101, 102) aufweist, wobei ein zweites Ende des ersten Förderers einem ersten Ende des zweiten Förderermittels benachbart angeordnet ist und wobei der Zwischenraum durch einen Abstand zwischen dem zweiten und dem ersten Ende definiert wird, und **dadurch gekennzeichnet, dass** die Form der Tragoberfläche um den ersten Zwischenraum herum konkav ist und im Wesentlichen dem Messerweg der drehbaren Messerklinge folgt, und
• die Querschnittform der Tragoberfläche, die sich über die Fördereranlage und im rechten Winkel zu der Förderrichtung erstreckt, ein Bogen ist, der einen Mittelpunkt eines Kreises im Wesentlichen an der Drehachse der drehbaren Messervorrichtung aufweist, oder
• die Querschnittform der Tragoberfläche, die sich über die Fördereranlage und in der Richtung des Förderers gesehen erstreckt, ein vertikal ausgerichtetes elliptisches Schnittprofil bildet, derart, dass die Form des ersten Zwischenraums, wenn der erste Zwischenraum zu der zu der Förderrichtung rechtwinkeligen Achse einen Winkel bildet, ein Bogen sein kann, der einen Mittelpunkt eines Kreises im Wesentlichen an der Drehachse der drehbaren Messervorrichtung aufweist.

2. Fördereranlage mit einem Messer nach Anspruch 1, wobei die Tragoberfläche zwei oder mehr Seite an Seite angeordnete Endlosriemen oder -seile (201) aufweist.

3. Fördereranlage mit einem Messer nach einem beliebigen der vorhergehenden Ansprüche, wobei der erste Zwischenraum einen Winkel zu einer zu der Förderrichtung rechtwinkeligen Achse bildet.

4. Fördereranlage mit einem Messer nach einem beliebigen der vorhergehenden Ansprüche, ferner aufweisend einen zweiten Zwischenraum (503), der in Bezug auf den ersten Zwischenraum (103) nachgelagert angeordnet ist, wobei der zweite Zwischenraum einen Winkel in Bezug auf den ersten Zwischenraum bildet, und wobei die Fördereranlage mit einem Messer ferner eine zweite drehbare Messervorrichtung (509) mit einer Messerebene, die sich durch den zweiten Zwischenraum erstreckt, aufweist.

5. Fördereranlage mit einem Messer nach Anspruch 4, wobei der Winkel des zweiten Zwischenraums in Bezug auf den Winkel des ersten Zwischenraums um zwischen 70° und 110°, vorzugsweise um etwa 90°, versetzt ist.

6. Fördereranlage mit einem Messer nach einem beliebigen der Ansprüche 1 oder 2, wobei der erste Zwischenraum rechtwinkelig zu der Förderrichtung ist.

7. Fördereranlage mit einem Messer nach einem beliebigen der vorhergehenden Ansprüche, ferner aufweisend ein erstes Bilderfassungssystem (507), das in Bezug auf den ersten Zwischenraum (103) vorgelagert angeordnet ist und dazu ausgebildet ist, erste Bilddaten von ankommenden Lebensmittelstücken zu erfassen, und einen Prozessor, der dazu ausgebildet ist, die ersten Bilddaten zu empfangen, um Steuerparameter zum Steuern der ersten drehbaren Messervorrichtung zu erstellen.

8. Fördereranlage mit einem Messer nach Anspruch 4 bis 7, ferner aufweisend ein zweites Bilderfassungssystem (508), das zwischen dem ersten und dem zweiten Zwischenraum angeordnet ist und dazu ausgebildet ist, zweite Bilddaten von zerschnittenen Lebensmittelstücken zu erfassen, und einen Prozessor, der dazu ausgebildet ist, die zweiten Bilddaten zu empfangen, um Steuerparameter zum Steuern der zweiten drehbaren Messervorrichtung (509) zu erstellen.

9. Fördereranlage mit einem Messer nach einem beliebigen der vorhergehenden Ansprüche, wobei die Messervorrichtung aufweist:
• einen Arm (105), wobei die Messerklinge (106) an einem Ende des Arms angebracht ist, wobei das entgegengesetzte Ende des Arms dazu ausgebildet ist, an einer Antriebseinheit (108) zum Versetzen des Arms und somit der Messerklinge in Drehbewegung angebracht zu werden,
wobei die Messerklinge an dem Arm derart angebracht ist, dass, während ein Lebensmittelstück in kleinere Lebensmittelstücke zerschnitten wird, eine Schneidkantenseite (110) der Messerklinge in einem Winkel (301) mit dem Lebensmittelstück in Kontakt kommt, derart, dass die Messerklinge während des Schneidens eine abwärtsgerichtete Kraft auf das Lebensmittelstück (401) und in Richtung der Tragoberfläche der Fördereranlage ausübt.

10. Fördereranlage mit einem Messer nach Anspruch 9, wobei die Schneidkantenseite (110) und die Tragoberfläche oder eine Tangente an dem Kontaktpunkt der Tragoberfläche (101, 102) um den Zwischenraum herum während des Schneidens einen spitzen Winkel bilden.

11. Fördereranlage mit einem Messer nach Anspruch 10, wobei der spitze Winkel (201) an die Art und/oder die Eigenschaften des Lebensmittelstücks und/oder den Reibungskoeffizienten der Tragoberfläche angepasst ist, derart, dass während des Schneidens die horizontale Kraft (Fₕₒᵣᵢ), welche durch die Messervorrichtung auf das Lebensmittelstück ausgeübt wird, die Reibungskraft zwischen dem Lebensmittelstück und der Tragoberfläche nicht übersteigt.

12. Fördereranlage mit einem Messer nach einem beliebigen der vorhergehenden Ansprüche, ferner aufweisend einen Schneidebeneneinstellmechanismus, der dazu ausgebildet ist, den Winkel der Messerebene im Vergleich zu der Vertikalen durch Einstellen der Winkelposition der Messervorrichtung(en) zu verschwenken.

13. Verfahren zum Zerschneiden von Lebensmittelstücken in kleinere Lebensmittelstücke mittels einer Fördereranlage mit einem Messer, welche aufweist:
• eine erste drehbare Messervorrichtung, die eine Messerklinge aufweist,
• ein Fördersystem zum Fördern von zu zerschneidenden Lebensmittelstücken,
wobei die drehbare Messervorrichtung oberhalb einer Tragoberfläche des Fördersystems angeordnet ist, wobei sich die Messerebene der drehbaren Messervorrichtung durch einen ersten Zwischenraum erstreckt, wobei die drehbare Messervorrichtung zum Zerschneiden eines Lebensmittelstücks in kleinere Lebensmittelstücke, während sich das Lebensmittelstück an dem ersten Zwischenraum vorbeibewegt, ausgebildet ist,
wobei die Fördereranlage ein erstes und ein zweites Förderermittel (101, 102) aufweist, wobei ein zweites Ende des ersten Förderers einem ersten Ende des zweiten Förderermittels benachbart angeordnet ist und wobei der Zwischenraum durch einen Abstand zwischen dem zweiten und dem ersten Ende definiert ist, und
**dadurch gekennzeichnet, dass** die Form der Tragoberfläche um den ersten Zwischenraum herum konkav ist und im Wesentlichen dem Messerweg der drehbaren Messerklinge folgt, und
• die Querschnittform der Tragoberfläche, die sich über die Fördereranlage und im rechten Winkel zu der Förderrichtung erstreckt, ein Bogen ist, der einen Mittelpunkt eines Kreises im Wesentlichen an der Drehachse der drehbaren Messervorrichtung aufweist, oder
• die Querschnittform der Tragoberfläche, die sich über die Fördereranlage und in der Richtung des Förderers gesehen erstreckt, ein vertikal ausgerichtetes elliptisches Schnittprofil bildet, derart, dass die Form des ersten Zwischenraums, wenn der erste Zwischenraum zu der zu der Förderrichtung rechtwinkeligen Achse einen Winkel bildet, ein Bogen sein kann, der einen Mittelpunkt eines Kreises im Wesentlichen an der Drehachse der drehbaren Messervorrichtung aufweist.

14. Verfahren nach Anspruch 13, wobei das Verfahren für flache Lebensmittelstücke bestimmt ist.

15. Verfahren nach Anspruch 14, wobei das Verfahren für Fischfilets oder Hühnerkeulenfleisch wie etwa entbeintes Keulenfleisch bestimmt ist.

16. Verfahren nach einem beliebigen der Ansprüche 13-15,
wobei die Fördereranlage ferner einen zweiten Zwischenraum (503) aufweist, der in Bezug auf den ersten Zwischenraum (103) nachgelagert angeordnet ist, wobei der zweite Zwischenraum einen Winkel in Bezug auf den ersten Zwischenraum bildet, und wobei die Fördereranlage mit einem Messer ferner eine zweite drehbare Messervorrichtung (509) mit einer Messerebene, die sich durch den zweiten Zwischenraum erstreckt, aufweist,
wobei der Winkel des zweiten Zwischenraums in Bezug auf den Winkel des ersten Zwischenraums um zwischen 70° und 110°, vorzugsweise um etwa 90°, versetzt ist, und
wobei die erste Messervorrichtung die Lebensmittelstücke in eine Vielzahl von Streifen schneidet und die zweite Messervorrichtung die Streifen wiederum in kleinere Stücke schneidet, die im Wesentlichen rechteckige, beispielsweise quadratische, Stücke sind.

## Revendications

1. Système de convoyeur doté d'un couteau (100, 500) adapté pour couper des morceaux d'aliments (401) en morceaux d'aliments plus petits (510, 511), comprenant :
• un premier dispositif de couteau rotatif (104) comprenant une lame de couteau (106),
• un système de convoyage (101, 102) pour transporter des morceaux d'aliments destinés à être coupés,
dans lequel le dispositif de couteau rotatif est positionné au-dessus d'une surface porteuse du système de convoyage avec le plan de couteau du dispositif de couteau rotatif s'étendant à travers un premier espace vide, le dispositif de couteau rotatif étant adapté pour couper un morceau d'aliment en morceaux d'aliments plus petits tandis que le morceau d'aliment passe le premier espace vide,
dans lequel le système de convoyeur comprend un premier et un second moyen de convoyeur (101, 102), où une seconde extrémité du premier convoyeur est positionnée adjacente à une première extrémité du second moyen de convoyeur et où l'espace vide est défini par une distance entre les première et seconde extrémités, et **caractérisé en ce que** la forme de la surface porteuse autour du premier espace vide est concave et suit essentiellement le trajet de couteau de la lame de couteau rotatif, et
• la forme en section de la surface porteuse s'étendant à travers le système de convoyeur et perpendiculaire à la direction de convoyage est un arc ayant un centre d'un cercle essentiellement à l'axe de rotation du dispositif de couteau rotatif, ou bien
• la forme en section de la surface porteuse s'étendant à travers le système de convoyeur et vu dans la direction du convoyeur forme une section elliptique orientée verticalement de telle façon que la forme du premier espace vide lorsque le premier espace vide forme un angle avec l'axe perpendiculaire à la direction de convoyage peut être un arc ayant un centre d'un cercle essentiellement à l'axe de rotation du dispositif de couteau rotatif.

2. Système de convoyeur doté d'un couteau selon la revendication 1, dans lequel la surface porteuse comprend deux ou plusieurs courroies ou cordons (201) sans fin agencés côte à côte.

3. Système de convoyeur doté d'un couteau selon l'une quelconque des revendications précédentes, dans lequel le premier espace forme un angle avec un axe perpendiculaire à la direction de convoyage.

4. Système de convoyeur doté d'un couteau selon l'une quelconque des revendications précédentes, comprenant en outre un second espace vide (503) positionné en aval par rapport au premier espace vide (103), dans lequel le second espace vide forme un angle par rapport au premier espace vide, et où le système de convoyeur doté d'un couteau comprend en outre un second dispositif de couteau rotatif (509) ayant un plan de couteau s'étendant à travers le second espace vide.

5. Système de convoyeur doté d'un couteau selon la revendication 4, dans lequel l'angle du second espace vide est décalé, par rapport à l'angle du premier espace vide, d'entre 70° et 110°, de préférence d'environ 90°.

6. Système de convoyeur doté d'un couteau selon l'une quelconque des revendications 1 ou 2, dans lequel le premier espace vide est perpendiculaire à la direction de convoyage.

7. Système de convoyeur doté d'un couteau selon l'une quelconque des revendications précédentes, comprenant en outre un premier système d'imagerie (507) positionné en amont par rapport au premier espace vide (103) adapté pour obtenir des premières données d'image de morceaux d'aliments arrivant, et un processeur adapté pour recevoir les premières données d'images pour créer des paramètres de commande pour commander le premier dispositif de couteau rotatif.

8. Système de convoyeur doté d'un couteau selon l'une quelconque des revendications 4 à 7, comprenant en outre un second système d'imagerie (508) positionné entre le premier et le second espace vide adapté pour obtenir des secondes données d'images de morceaux d'aliments coupés, et un processeur adapté pour recevoir les secondes données d'images pour créer des paramètres de commande pour commander le second dispositif de couteau rotatif (509).

9. Système de convoyeur doté d'un couteau selon l'une quelconque des revendications précédentes, dans lequel le dispositif de couteau comprend :
• un bras (105), où la lame de couteau (106) est montée sur une extrémité du bras, l'extrémité opposée du bras étant adaptée pour être montée sur une unité d'entraînement (108) pour fournir le mouvement de rotation du bras et ainsi de la lame de couteau,
dans lequel la lame de couteau est montée sur le bras de telle façon que, tout en coupant un morceau d'aliment en morceaux d'aliments plus petits, un côté de bord de coupe (110) de la lame de couteau s'engage avec le morceau d'aliment dans un angle (301) de telle façon que la lame de couteau exerce une force orientée vers le bas sur le morceau d'aliment (401) et en direction de la surface porteuse du système de convoyeur pendant la coupe.

10. Système de convoyeur doté d'un couteau selon la revendication 9, dans lequel le côté de bord de coupe (110) et la surface porteuse ou une tangente au point de contact de la surface porteuse (101, 102) autour de l'espace vide forment un angle aigu pendant la coupe.

11. Système de convoyeur doté d'un couteau selon la revendication 10, dans lequel l'angle aigu (201) est adapté au type et/aux caractéristiques du morceau d'aliment et/ou du coefficient de frottement de la surface porteuse de telle façon que pendant la coupe, la force horizontale exercée (Fₕₒᵣᵢ) par le dispositif de couteau sur le morceau d'aliment n'exerce pas la force de friction entre le morceau d'aliment et la surface porteuse.

12. Système de convoyeur doté d'un couteau selon l'une quelconque des revendications précédentes, comprenant en outre un mécanisme d'ajustement de plan de coupe adapté pour basculer l'angle du plan de couteau comparé à la verticale en ajustant la position angulaire du/des dispositif(s) de couteau.

13. Procédé de coupe de morceaux d'aliments en morceaux d'aliments plus petits utilisant un système de convoyeur doté d'un couteau qui comprend :
• un premier dispositif de couteau rotatif comprenant une lame de couteau ;
• un système de convoyage pour transporter des morceaux d'aliments à couper,
dans lequel le dispositif de couteau rotatif est positionné au-dessus d'une surface porteuse du système de convoyeur avec le plan de couteau du dispositif de couteau rotatif s'étendant à travers un premier espace vide, le dispositif de couteau rotatif étant adapté pour couper un morceau d'aliment en morceaux d'aliments plus petits tandis que le morceau d'aliment passe le premier espace vide,
dans lequel le système de convoyeur comprend un premier et un second moyen de convoyeur (101, 102), où une seconde extrémité du premier convoyeur est positionnée adjacente à une première extrémité du second moyen de convoyeur et où l'espace vide est défini par une distance entre les première et seconde extrémités, et **caractérisé en ce que** la forme de la surface porteuse autour du premier espace vide est concave et suit essentiellement le trajet de couteau de la lame de couteau rotatif, et
• la forme en section de la surface porteuse s'étendant à travers le système de convoyeur et perpendiculaire à la direction de convoyage est un arc ayant un centre d'un cercle essentiellement à l'axe de rotation du dispositif de couteau rotatif, ou bien
• la forme en section de la surface porteuse s'étendant à travers le système de convoyeur et vu dans la direction du convoyeur forme une section elliptique orientée verticalement de telle façon que la forme du premier espace vide lorsque le premier espace vide forme un angle avec l'axe perpendiculaire à la direction de convoyage peut être un arc ayant un centre d'un cercle essentiellement à l'axe de rotation du dispositif de couteau rotatif.

14. Procédé selon la revendication 13, dans lequel le procédé est pour des morceaux d'aliment plats.

15. Procédé selon la revendication 14, dans lequel le procédé est pour des filets de poisson ou de la chair de cuisse de poulet comme de la chair de cuisse désossée.

16. Procédé selon l'une quelconque des revendications 13-15, dans lequel le système de convoyeur comprend en outre un second espace vide (503) positionné en aval par rapport au premier espace vide (103), dans lequel le second espace vide forme un angle par rapport au premier espace vide, et où le système de convoyeur doté d'un couteau comprend un second dispositif de couteau rotatif (509) ayant un plan de couteau s'étendant à travers le second espace vide,
dans lequel l'angle du second espace vide est décalé, par rapport à l'angle du premier espace vide, d'entre 70° et 110°, de préférence d'environ 90°, et
dans lequel le premier dispositif de couteau coupe les morceaux d'aliment en une pluralité de bandes et le second dispositif de couteau coupe les bandes en d'autres morceaux plus petits étant essentiellement rectangulaires, comme des morceaux carrés.
